# EUROPEAN PATENT SPECIFICATION

(11) **EP 0 973 140 B1**
(45) Date of publication and mention of the grant of the patent: **05.11.2003**
(21) Application number: 98830437.4
(22) Date of filing: 17.07.1998
(51) Int. Cl.: G08G 5/02

(54) **Improved electro-optically stabilized glide angle indicator device**
Verbessertes elektrooptisches Anzeigegerät mit stabilisiertem Gleitwinkel
Appareil amélioré d'indication d'angle de descente stabilisée de façon électro-optique

(43) Date of publication of application: 19.01.2000
(73) Proprietor: Calzoni S.r.l., Calderara di Reno (Bologna) (IT)
(72) Inventor: Biffi Gentili, Guido, 50141 Firenze (IT); Vivoli, Marcello, 50065 Pontassieve (FI) (IT)
(74) Representative: Raimondi, Alfredo, Dott. Ing. Prof.

(56) References cited:
- WO-A-88/01734
- WO-A-94/04984
- US-A- 4 415 879
- US-A- 5 089 816
- US-A- 5 523 887
- US-A- 5 610 600

## Description

This invention broadly relates to systems for indicating the glide angle or slope of an aircraft on a tender ship and more particularly it is related to such a system in which the light beam projected by a suitable optical projector is made independent of the roll and pitch movements of the ship by means of an electro-optical stabilization device free from movable mechanical parts.

Known optical glide slope indicator devices (GSI - Glide Slope Indicator), as generally employed on board of aircraft carrier ships in order to provide an optical aid to approaching helicopters, utilize an optical beam which indicates the proper deck landing angle to the pilot, by means of a suitable coding based upon the color or upon a modulation of discrete sectors of the beam itself.

A problem encountered with these devices is caused by the fact that the location and the orientation of the indicator optical beam are subject to the influences due to the pitch and roll movements of the tender ship, such that, should these influences be not suitably accommodated, they could make the indicator device completely useless.

All of the indicator devices up to now realized utilize a stabilized platform to which the projection optical system is attached, in order to dear the concerned optical beam from the above mentioned pitch and roll movements of the ship. The platform is served to a local or centralized, vertical reference generator or supplier by means of accurately designed servomechanisms of noticeable mechanical complexity, unavoidably subject to wear and to failures.

Besides that, it is to be remarked that the platform - projector assembly unavoidably has a mechanical mass and, therefore, it is subject to inertial effects and consequently it is affected by a certain delay in responding to serving commands, which results into a certain error in angular tracking.

US-A-5 523 887 discloses a stabilized imaging system, using an electro-optic imager to compensate for movements of the airplane, it is mouted into.

When the beam is only coded on a chromatic base, such is in Glide Slope Indicator devices of YGR (Yellow, Green, Red) type, the optical system includes color filters that determine the angular width of each sector with their dimensions. On the other side, in FGR (Flashing Green Red : flashing green, green, red, flashing red) devices, in which the modulation of the outer sectors is required, it is generally achieved by means of oscillating shields, which are the cause of further mechanical complications.

Taking this state of the art of designing deck landing systems for helicopters as a starting base, it is the broad object of this invention to eliminate to the maximum possible extent the required mechanical members subject to wear and inertial effects and, at the same time, to implement a technique to synthesize the optical beam so as to enable it to be easily reconfigured via software, thereby achieving not only a very high system flexibility as well as a response free from all delays due to inertial effects, but also a remarkable reduction of the manufacture and maintenance costs.

Further details and advantages of this invention will be evident from the following specification by referring to the enclosed drawings wherein the preferred embodiment is shown by way of illustration and not by way of limitation.

In the drawings:

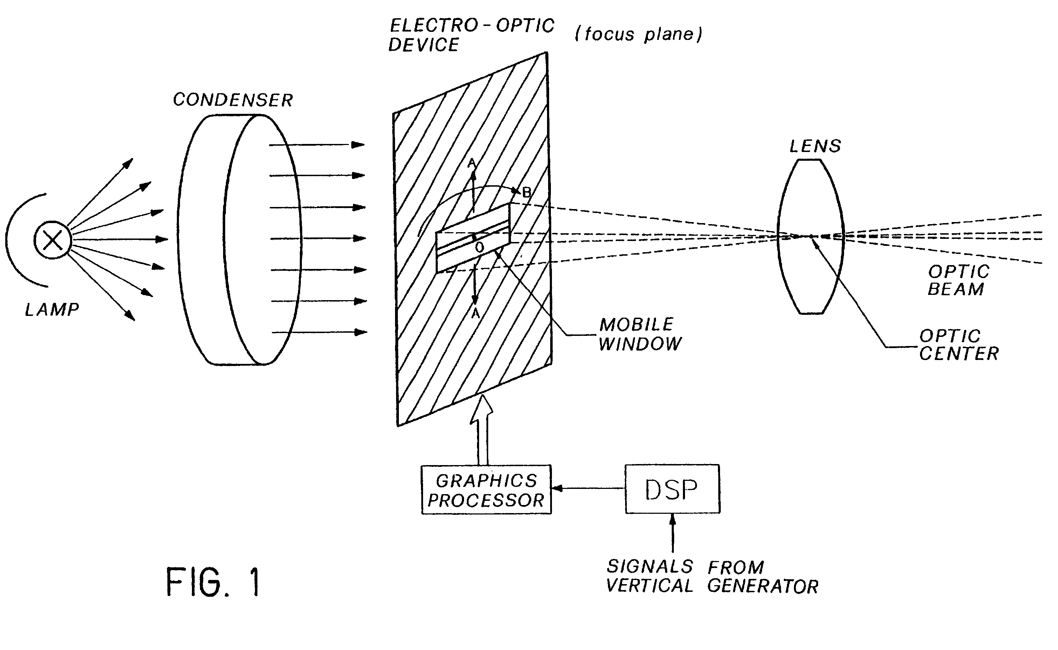

Figure 1 is a schematic view of the sole projector, the construction of which is completely conventional, since it is comprised of a lamp, a condenser and a lens of suitable focal distance,

By referring now to Figure 1, it can be observed that this invention is based upon the concept to realize a construction in which, in stead of conventional color filters that determine the angular width and the color code of each sector of the beam by means of their colors and of their dimensions, a liquid crystal active matrix electro-optical device is employed, such as already used in portable personal computers.

As a matter of fact, the device is comprised of a panel consisting of a large number of small discrete areas (pixels) which, when they are driven by suitable scanning electronics, are adapted to form a color image in the focal plane of the lens.

The operation of the device is based upon the usual component acting as a vertical reference supplier, the output signals of which are processed in real time by a dedicated DSP (Digital Signal Processor) unit and subsequently coupled to a graphics processor which generates the drive signals to be furnished to said liquid crystal device.

Good performances can be achieved when the pixel scanning frequency is such as to enable to synthesize also rapidly moving images and, therefore, without noticeable dragging (inertial) effects.

A rectangular window is created on said liquid crystal panel, vertically subdivided into sectors of different colors, each of which is equivalent to a different color filter.

The location of said window on the focal plane is continually up-dated in real time, in order to compensate or accommodate the oscillations of the ship and consequently to maintain the optical beam stationary in space. In particular, the pitch movements are accommodated by upwardly or downwardly displacing the window (arrow designated as A), while the roll movements are accommodated by rotating the window about the central point 0 of the image, centered on the beam axis (arrow designated as B).

Thanks to a construction realized as above described and driven as above described in order to keep the pitch and roll movements into account, the need to employ a stabilized platform is eliminated, in view of the fact that its function is perfectly exploited by said conveniently driven, electro-optical, liquid crystal device. Furthermore, since this system is virtually free from any inertial effects, an "open loop" control can be effected, without recourse to complex and expensive angular transducers.

Said liquid crystal device virtually enables any color of the visible spectrum to be synthesized, with any angular width and under any modulation of each sector forming the beam, thereby imparting to the resulting system a flexibility grade that effectively cannot be achieved by any system of the prior art.

In other words, any operation mode, inclusive of any NVG (Night Vision Goggles) mode, can be implemented by simply reconfiguring the system via software. In this system, in fact, not only the adjustment of the light beam intensity, but also all its chromatic, angular and modulation characteristics are governed via software.

It can be easily appreciated by those skilled in the art that, by exploiting a system according to this invention, by ON-OFF modulation of the light beam or of a sector of the light beam, at a pre-established frequency, or of different sectors of the light beam at different pre-established frequencies, the pilot can be supplied with information concerning the descent slope in a manner independent from the colors, for flight applications with Night Vision Goggles (NVG), or with additional suitably coded information, free from ambiguities with respect to the descent angular position information.

In conclusion, by exploiting the device according to this invention, it is possible to supply the pilot with any information concerning the descent slope, either by means of color coding, or by means of an ON-OFF modulation of the light beam at a pre-established frequency, or by a combination of both above mentioned approaches.

Further advantages of this invention are gained in view of absence of moving mechanical parts, such as torque generating motors, synchros and gear speed reductors. This entails, in turn, a remarkable decrease of the construction and operation complexities, as well as a quick absorption of the heat generated by the lamp, in addition - of course - to a substantial cost reduction.

In the light of the preceding description, it can be easily understood that, even if an electro-optical device has been described, particularly a liquid crystal panel of transmission type, also an electro-optical device of reflection type could be used, such as DMD (Digital Micromirror Device) devices, by suitable accommodations easily designed by expert designers skilled in the art.

## Claims

1. A system for installation on a tender ship for indicating the glide slope of an aircraft to said tender ship by means of a suitable coding based upon the color or upon the discrete modulation of a sectorized optical beam, with electro-optical stabilization of said beam, comprising a vertical reference supplier and a projector consisting of a lamp, a condenser and a lens,
**characterized in that** an electro-optical device including means for conditioning said optical beam in order to supply the pilot with the indication of the glide slope in a manner independent from the pitch and roll movements of said tender ship, with open loop control and without the use of moving mechanical parts, is inserted into the focal plane of said lens.

2. A system for indicating the glide slope according to claim 1, **characterized in that** said means for conditioning said optical beam operate in transmission mode and comprise an active matrix, liquid crystal panel.

3. A system for indicating the glide slope according to claim 1, **characterized in that** said means for conditioning said optical beam operate in reflection mode and comprise a micromirror device (DMD).

4. A system for indicating the glide slope according to claims 1 and 2 or 3, **characterized in that** said means for conditioning said optical beam comprise a pixel matrix, driven by scanning optics, in order to form in the focal plane of the lens a rectangular window shaped image, vertically subdivided into sectors of different colors, with such a scanning frequency as to enable also rapidly moving images to be synthesized without noticeable dragging effects, and **in that** said means for conditioning said optical beam are driven by a graphics processor which receives signals generated by said vertical reference supplier, upon said signals being processed by a dedicated DSP (Digital Signal Processing) unit.

5. A system for indicating the glide slope according to claim 4, **characterized in that** the pitch movements of said tender ship are accommodated by upwardly or downwardly (A-A) shifting said window.

6. A system for indicating the glide slope according to claim 4, **characterized in that** the roll movements of said tender ship are accommodated by rotating said window about the axis of said beam (B).

7. A system for indicating the glide slope according to any one of the preceding claims, **characterized in that** the information concerning the descent slope is coded either by color, or by ON-OFF modulation of the beam at a pre-established frequency, or by a combination thereof.

8. A system for indicating the glide slope according to any one of the preceding claims, with ON-OFF modulation of the beam or of a sector of the beam at pre-established frequency or of different sectors of the beam at different frequencies, **characterized in that** the information about the descent slope is furnished in a manner that is cleared from the colors, for flight application with night vision goggles (NVG).

9. A system for indicating the glide slope according to any one of the preceding claims, **characterized in that** the adjustment of the light intensity of the beam is carried out by software.

10. A system for indicating the glide slope according to any one of the preceding claims, **characterized in that** the chromatic, angular and modulation characteristics of the beam are reconfigurable via software.

11. A system for indicating the glide slope according to any one of the preceding claims, **characterized in that** said window is subdivided into modulatable sectors, so as to supply the pilot with suitably coded information, free from ambiguities with respect to the descent angular position information.

## Patentansprüche

1. System für eine Installierung auf einem Begleitschiff zum Anzeigen eines Gleitpfades eines Luftfahrzeugs zu dem Begleitschiff mittels einer geeigneten Kodierung basierend auf der Farbe oder auf der diskreten Modulation eines sektorierten optischen Strahls mit einer elektro-optischen Stabilisierung des Strahls, welches ein Mittel zum Bereitstellen einer Vertikalreferenz und einen Projektor, der aus einer Lampe, einem Kondensor und einer Linse besteht, aufweist,
**dadurch gekennzeichnet, daß** eine elektro-optische Vorrichtung, welche Mittel zum Aufbereiten des optischen Strahls beinhaltet, um den Piloten mit der Anzeige des Gleitpfades in einer Weise zu versorgen, die unabhängig von den Stampf- und Rollbewegungen des Begleitschiffes ist, mit einer offenen Regelkreissteuerung und ohne Verwendung von sich bewegenden mechanischen Teilen, in die Brennebene der Linse eingefügt ist.

2. System zum Anzeigen des Gleitpfades nach Anspruch 1, **dadurch gekennzeichnet, daß** das Mittel zum Aufbereiten des optischen Strahls im Sendemodus arbeitet und ein Aktivmatrix-Flüssigkristallfeld aufweist.

3. System zum Anzeigen des Gleitpfades nach Anspruch 1, **dadurch gekennzeichnet, daß** das Mittel zum Aufbereiten des optischen Strahls im Reflexionsmodus arbeitet und eine Mikrospiegelvorrichtung (DMD) aufweist.

4. System zum Anzeigen des Gleitpfades nach Anspruch 1, 2 oder 3, **dadurch gekennzeichnet, daß** das Mittel zum Aufbereiten des optischen Strahls eine Pixelmatrix aufweist, die durch eine Abtastoptik angetrieben wird, um in der Brennebene der Linse ein rechtwinkliges Bild in Form eines Fensters zu bilden, das vertikal in Sektoren verschiedener Farben unterteilt ist, mit einer derartigen Abtastfrequenz, daß auch sich rasch bewegende Bilder ohne wahrnehmbare Verzerrungseffekte synthetisiert werden können, und dadurch, daß die Mittel zum Aufbereiten des optischen Strahl durch einen Grafikprozessor gesteuert werden, der durch das Mittel zum Bereitstellen einer Vertikalreferenz erzeugte Signale empfängt, nachdem die Signale durch eine ausschließlich zugeordnete DSP-(Digitalsignalverarbeitung)-Einheit verarbeitet wurden.

5. System zum Anzeigen des Gleitpfades nach Anspruch 4, **dadurch gekennzeichnet, daß** die Stampfbewegungen des Begleitschiffs durch aufwärts oder abwärts (A-A) Verschieben des Fensters aufgenommen werden.

6. System zum Anzeigen des Gleitpfades nach Anspruch 4, **dadurch gekennzeichnet, daß** die Rollbewegungen des Begleitschiffs durch Drehen des Fensters um die Achse des Strahls (B) aufgenommen werden.

7. System zum Anzeigen des Gleitpfades nach einem der vorhergehenden Ansprüche, **dadurch gekennzeichnet, daß** die Information betreffend den Sinkflugpfad entweder durch Farbe oder durch eine EIN-AUS-Modulation des Strahls bei einer voreingestellten Frequenz kodiert ist, oder durch eine Kombination davon.

8. System zum Anzeigen des Gleitpfades nach einem der vorhergehenden Ansprüche, mit einer EIN-AUS-Modulation des Strahls oder eines Sektors des Strahls bei einer voreingestellten Frequenz oder von verschiedenen Sektoren des Strahls bei verschiedenen Frequenzen, **dadurch gekennzeichnet, daß** für eine Fluganwendung mit einer Nachtsichtbrille (NVG) die Information über den Sinkflugpfad in einer Weise geliefert wird, bei welcher die Farben beseitigt sind.

9. System zum Anzeigen des Gleitpfades nach einem vorhergehenden Ansprüche, **dadurch gekennzeichnet, daß** das Einstellen der Lichtintensität des Strahls durch Software ausgeführt wird.

10. System zum Anzeigen des Gleitpfades nach einem der vorhergehenden Ansprüche, **dadurch gekennzeichnet, daß** die chromatischen Eigenschaften, die Winkel- und die Modulations-Eigenschaften des Strahls über Software rekonfigurierbar sind.

11. System zum Anzeigen des Gleitpfades nach einem der vorhergehenden Ansprüche, **dadurch gekennzeichnet, daß** das Fenster in modulierbare Sektoren unterteilt ist, um den Piloten mit geeignet kodierter Information zu versorgen, die frei von Zweideutigkeiten in Bezug auf Information über die Sinkflugwinkelposition ist.

## Revendications

1. Un système pour installation sur un bateau-support pour indiquer l'alignement de descente d'un l'aéronef audit bateau-support grâce à un codage adéquat basé sur la couleur ou la modulation discrète d'un faisceau optique sectorisé, avec stabilisation électro-optique dudit faisceau, comprenant des moyens de fourniture de référence verticale et un projecteur comprenant une lampe, un condenseur et une lentille,
**caractérisé en ce qu'**un dispositif électro-optique comprenant des moyens pour conditionner ledit faisceau optique afin de fournir au pilote une indication de l'alignement de descente d'une façon indépendante des mouvements de roulis et de tangage dudit bateau-support, avec commande en boucle ouverte et sans l'utilisation de composants mécaniques mobiles est inséré dans le plan focal de ladite lentille.

2. Un système pour indiquer l'alignement de descente selon la revendication 1, **caractérisé en ce que** lesdits moyens pour conditionner ledit faisceau optique fonctionne en mode de transmission et comprend un panneau à cristal liquide à matrice active.

3. Un système pour indiquer l'alignement de descente selon la revendication 1, **caractérisé en ce que** lesdits moyens pour conditionner ledit faisceau optique fonctionne en mode de réflexion et comprend un dispositif à micro-miroirs (DMD).

4. Un système pour indiquer l'alignement de descente selon les revendications 1 et 2 ou 3, **caractérisé en ce que** lesdits moyens pour conditionner ledit faisceau optique comprend une matrice de pixels, pilotée par un système optique de balayage, afin de former dans le plan focal de la lentille une image sous forme d'une fenêtre rectangulaire, divisée verticalement en secteurs de différentes couleurs, utilisant une fréquence de balayage permettant de synthétiser également des images à déplacement rapide sans effets de traînées visibles, et **en ce que** lesdits moyens pour conditionner ledit faisceau optique sont pilotés par un processeur graphique qui reçoit des signaux générés par lesdits moyens de fourniture de référence verticale, après le traitement desdits signaux par un dispositif de traitement numérique de signaux (DSP) spécifique.

5. Un système pour indiquer l'alignement de descente selon la revendication 4, **caractérisé en ce que** les mouvements de tangage dudit bateau-support sont pris en compte par décalage vers le haut ou vers le bas (A-A) de ladite fenêtre.

6. Un système pour indiquer l'alignement de descente selon la revendication 4, **caractérisé en ce que** les mouvements de roulis dudit bateau-support sont pris en compte par la rotation de ladite fenêtre autour de l'axe dudit faisceau (B).

7. Un système pour indiquer l'alignement de descente selon l'une quelconque des revendications précédentes, **caractérisé en ce que** l'information concernant la trajectoire de descente est codée soit par couleurs, soit par une modulation en tout ou en rien du faisceau à une fréquence pré-établie ou par une combinaison des deux.

8. Un système pour indiquer l'alignement de descente selon l'une quelconque des revendications précédentes, avec un modulation en tout ou en rien du faisceau ou d'un secteur du faisceau à une fréquence pré-établie ou de différents secteurs du faisceau à des fréquences différentes, **caractérisé en ce que** l'information concernant la trajectoire de descente est fournie d'une façon indépendante des couleurs, pour application en vol avec des lunettes de vision nocturne (NVG).

9. Un système pour indiquer l'alignement de descente selon l'une quelconque des revendications précédentes, **caractérisé en ce que** le réglage de l'intensité lumineuse du faisceau est réalisée par logiciel.

10. Un système pour indiquer l'alignement de descente selon l'une quelconque des revendications précédentes, **caractérisé en ce que** les caractéristiques chromatiques, angulaires et de modulations du faisceau sont susceptibles d'être reconfigurées par logiciel.

11. Un système pour indiquer l'alignement de descente selon l'une quelconque des revendications précédentes, **caractérisé en ce que** ladite fenêtre est sous-divisée en des secteurs susceptibles d'être modulés afin de fournir au pilote des informations codées de façon adéquate, dépourvue d'ambiguïté en ce qui concerne les informations de position angulaire de descente.
